(19)

Europäisches
Patentamt

European
Patent Office

Office européen
des brevets

(11) **EP 3 843 004 A1**

(12) **EUROPEAN PATENT APPLICATION**

(43) Date of publication:
**30.06.2021 Bulletin 2021/26**

(51) Int Cl.:
***G06K 9/34*** *(2006.01)*          ***G06K 9/62*** *(2006.01)*

(21) Application number: **20205924.2**

(22) Date of filing: **05.11.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **23.12.2019 CN 201911342311**

(71) Applicants:
• **GUANGDONG OPPO MOBILE TELECOMMUNICATIONS CORP., LTD.**
**Wusha, Chang'an**
**Dongguan**
**Guangdong 523860 (CN)**

• **Shanghai Jinsheng Communications Technology Co.,**
**Ltd.**
**Shanghai (CN)**

(72) Inventor: **WU, Jiatao**
**Dongguan, Guangdong 523860 (CN)**

(74) Representative: **Manitz Finsterwald**
**Patent- und Rechtsanwaltspartnerschaft mbB**
**Martin-Greif-Strasse 1**
**80336 München (DE)**

(54) **PORTRAIT SEGMENTATION METHOD, MODEL TRAINING METHOD AND ELECTRONIC DEVICE**

(57)    Embodiments of the present disclosure provide a portrait segmentation method, a model training method, and an electronic device. The input portrait segmentation request is received, the to-be-segmented image is obtained according to the portrait segmentation request, and the pre-trained portrait segmentation model is invoked to segment the to-be-segmented image into a portrait part and a background part. The portrait segmentation model includes a feature extraction network and a double branch network. The double branch network includes a portrait branch network and a background branch network with a same architecture. The portrait branch network is configured to accurately classify the portrait in the image, and the background branch network is configured to accurately classify the background in the image. Finally, the classification results of the two are fused to split the image into a portrait part and a background part.

EP 3 843 004 A1

**Description**

**TECHNICAL FIELD**

The present disclosure relates to the field of image processing technologies, and in particular to a portrait segmentation method, a model training method and an electronic device.

**BACKGROUND**

A portrait segmentation is a technology separating a portrait in an image from a background. The portrait segmentation has a wide range of applications in the fields of portrait blurring, portrait color retention, and background replacement in electronic devices. However, when the electronic devices perform the portrait segmentation, they often rely on specific hardware, such as double cameras, depth-of-field cameras, etc., increasing a hardware cost of electronic devices for an achievement of the portrait segmentation.

**SUMMARY OF THE DISCLOSURE**

The present disclosure discloses a segmentation method, including: receiving an input portrait-segmentation request, and obtaining a to-be-segmented image by the portrait segmentation request, wherein the to-be-segmented image is an image required to be portrait segmented; invoking a portrait segmentation model, the portrait segmentation model being pre-trained and including a feature-extraction network, a double branch network and an output layer , the double branch network including a portrait branch network and a background branch network, the output layer being connected to the portrait branch network and the background branch network; extracting image features of the to-be-segmented image by the feature extraction network; classifying the image features by the portrait branch network to obtain a portrait classification result, and classifying the image features by the background branch network to obtain a background classification result; and fusing the portrait classification result and the background classification result to obtain a fusion classification result, and classifying the fusion-classification result by the output layer to obtain a portrait part and a background part of the to-be-segmented image.

In some embodiments, the portrait branch network includes N portrait network segments with a same architecture, the background branch network includes N background network segments with a same architecture, and N is an integral number.

The classifying the image features by the portrait branch network to obtain a portrait classification result, and classifying the image features by the background branch network to obtain the background classification result, comprise: classifying the image features by a first portrait network segment to obtain a first portrait classification result, and classifying the image features by a first background network segment to obtain a first background classification result; fusing the first portrait classification result, the first background classification result and the image features to obtain a first group of fusion features, classifying the first group of fusion features by a second portrait network segment to obtain a second portrait classification result, and classifying the first group of fusion features by a second background network segment to obtain a second background classification result; fusing the second portrait classification result, the second background classification result and the image features to obtain a second group of fusion features, and performing similar operations until a N-th portrait classification result is obtained through classifying a (N-1)-th group of fusion features by a N-th portrait network segment, and a N-th background classification result is obtained through classifying the (N-1)-th group of fusion features by a N-th background network segment; and configuring the N-th portrait classification result as the portrait classification result of the portrait branch network, and configuring the N-th background classification result as the background classification result of the background branch network.

In some embodiments, each of the portrait network segments includes an encoding module, a decoding module connected to the encoding module, and a classification module connected to the decoding module.

The classifying the first group of fusion features by the second portrait network segment to obtain the second portrait classification result, includes: performing a feature-extraction operation and a down-sampling operation for the first group of fusion features by the encoding module of the second portrait network segment to obtain encoded features; performing another feature-extraction operation and an up-sampling operation for the encoded features by the decoding module of the second portrait network segment to obtain decoded features with a same scale as the first group of fusion features; and classifying the decoded features by the classification module of the second portrait network segment to obtain the second portrait classification result.

In some embodiments, the encoding module includes a plurality of first convolution sub-modules with a same architecture, the plurality of first convolution sub-modules are connected in sequence, and each of the first convolution sub-modules includes: a first convolution unit with a convolution kernel size of $3\times3$ and a step size of 2, a first normalization unit and a first activation-function unit connected in sequence.

In some embodiments, the decoding module includes a plurality of second convolution sub-modules with a same architecture, and the plurality of second convolution sub-modules are connected in sequence, and each of second convolution sub-modules includes: a second convolution unit with a convolution kernel size of $3\times3$ and a step size of 1, a second normalization unit, a second activation-function unit, and an up-sampling unit with a sampling multiple of 2 connected in sequence.

In some embodiments, the classification module includes a normalization unit with an output interval of [-1, 1].

In some embodiments, the encoding module includes a plurality of first convolution sub-modules, and the decoding module includes a plurality of second convolution sub-modules, and a number of the first convolution sub-modules and a number of the second convolution sub-modules are the same.

In some embodiments, the feature-extraction network includes a plurality of third convolution sub-modules with a same architecture, the plurality of third convolution sub-modules are connected in sequence, and each of the third convolution sub-modules includes: a third convolution unit, a third normalization unit and a third activation-function unit connected in sequence.

In some embodiments, the portrait segmentation model is pre-trained by a model training method, which including: obtaining a sample image, and obtaining classification labels corresponding to the sample image; constructing a machine learning network, the machine learning network including the feature-extraction network, the double branch network and an output layer, the double branch network including the portrait branch network and the background branch network, and the output layer being connected to the portrait branch network and the background branch network; extracting image features of the sample image by the feature extraction network, input the image features into the portrait branch network and the background branch network, to obtain a portrait classification training result output from the portrait branch network and a background classification training result output from the background branch network; fusing the portrait classification training result and the background classification training result into the output layer to obtain a final classification result; obtaining a portrait classification loss of the portrait branch network according to the portrait classification training result and the classification label, obtaining a background classification loss of the background branch network according to the background classification training result and the classification label, and obtaining a fusion loss of the output layer according to the final classification result and the classification label; and obtaining a total loss correspondingly according to the portrait classification loss, the background classification loss, and the fusion loss, adjusting parameters of the portrait branch network and the background branch network according to the total loss; wherein the above steps are repeated until a preset training stop condition is met for ending the training, and the machine learning network being completely trained, is configured as the portrait segmentation model.

In some embodiments, the image features extracted by the feature extraction network includes information of pixel position features in shallow-level of the sample image.

In some embodiments, the total loss is a sum of the portrait classification loss, the background classification loss, and the fusion loss.

In some embodiments, the preset training stop condition includes: the total loss being less than a minimum value; or a number of iterating parameters reaching a preset number.

In some embodiments, the portrait classification loss is calculated based on a batch size for training the machine learning network and a value of each portrait classification result of each portrait network segment in each pixel position.

In some embodiments, the background classification loss is calculated based on a batch size for training the machine learning network and a value of each background classification result of each background network segment in each pixel position.

The present disclosure provide an electronic device, including a processor and a memory, the memory storing a computer program, wherein the processor is configured to load the computer program for executing the portrait segmentation method as described before and the model training method as described before.

According to the present disclosure, the input portrait segmentation request is received, the to-be-segmented image is obtained according to the portrait segmentation request, and the pre-trained portrait segmentation model is invoked to segment the to-be-segmented image into a portrait part and a background part. The portrait segmentation model includes a feature extraction network and a double branch network. The double branch network includes a portrait branch network and a background branch network with a same architecture. The portrait branch network is configured to accurately classify the portrait in the image, and the background branch network is configured to accurately classify the background in the image. Finally, the classification results of the two are fused to split the image into a portrait part and a background part. Therefore, the segmentation of the portraits may be achieved without the help of related hardware, and the hardware cost of the electronic device to realize the portrait segmentation may be reduced.

## BRIEF DESCRIPTION OF THE DRAWINGS

To further illustrate technical solutions of embodiments of the present disclosure, drawings needed for description of some embodiments will be briefly introduced. Obviously, the following drawings are only some embodiments of the present disclosure. To any one of skill in the art, other drawings may be obtained without any creative work based on the following drawings.

FIG. 1 is a schematic flowchart of a model training method according to an embodiment of the present disclosure.
FIG. 2 is a schematic structural view of a network according to an embodiment of the present disclosure.
FIG. 3 is a schematic structural view of another network according to an embodiment of the present disclosure.
FIG. 4 is a schematic structural view of a portrait network segmentation according to an embodiment of the present disclosure.
FIG. 5 is a schematic structural view of a feature extraction network according to an embodiment of the present disclosure.
FIG. 6 is a schematic flowchart of a portrait segmentation method according to an embodiment of the present disclosure.
FIG. 7 is an exemplary view of a portrait segmentation interface according to an embodiment of the present disclosure.
FIG. 8 is an exemplary view of a selection sub-interface according to an embodiment of the present disclosure.
FIG. 9 is a schematic structural view of a model training device according to an embodiment of the present disclosure.
FIG. 10 is a schematic structural view of a portrait segmentation device according to an embodiment of the present disclosure.
FIG. 11 is a schematic structural view of an electronic device according to an embodiment of the present disclosure.

DETAILED DESCRIPTION

Referring to accompanying drawings of the present disclosure, components with a same component symbol are of the same components. A principle of the present disclosure is illustrated by implementation in an appropriate computing environment. The following description is through the specific embodiments of the present disclosure illustrated, and it should not be construed as limiting other specific embodiments not detailed herein.
An artificial intelligence (AI) is a theory, method, technology, and application system, using digital computers or digital computer-controlled machines to simulate, extend, and expand human intelligence, sense environments, acquire knowledge, and use knowledge to obtain best results. In other words, the artificial intelligence is a comprehensive technology in computer science. The artificial intelligence attempts to understand the essence of intelligence and produce a new intelligent machine capable of reacting in a similar way to human intelligence. Artificial intelligence is to study design principles and implementation methods of various intelligent machines, so that the intelligent machines may have functions of perception, reasoning and decision-making.
An artificial intelligence technology is a comprehensive subject, covering a wide range of fields and including both a hardware-level technology and a software-level technology. An artificial intelligence basic technology generally includes technologies such as sensors, dedicated artificial intelligence chips, cloud computing, distributed storages, big data processing technologies, operation or interaction systems, mechatronics and the like. An artificial intelligence software technology mainly includes computer vision technologies, speech processing technologies, natural language processing technologies, machine learning or deep learning and the like.
The machine learning (ML) is a multidisciplinary, cross-cutting subject, involving multiple subjects such as probability theories, statistics, approximation theories, convex analysis, algorithm complexity theory, and the like. The machine learning study specially how computers simulate or realize human learning behavior to acquire new knowledge or skills, and to reorganize existing knowledge structures to continuously improve the performance of the computers. The machine learning is the core of the artificial intelligence, and is the fundamental way to make computers intelligent. Applications of the machine learning are in various fields of the artificial intelligence. The machine learning and the deep learning usually include technologies such as artificial neural networks, confidence networks, reinforcement learning, transfer learning, inductive learning, and pedagogical learning.
Technical solutions according to some embodiments of the present disclosure relate to the machine learning technology of the artificial intelligence, and are specifically described by the following embodiments:
Some embodiments of the present disclosure provide a model training method, a portrait segmentation method, a model training device, a portrait segmentation device, a storage medium, and an electronic device. An execution subject of the model training method may be the model training device provided in some embodiments of the present disclosure, or may be an electronic device integrating the model training device. The model training device may be implemented in hardware or software. An execution subject of the portrait segmentation method may be the portrait segmentation device provided in some embodiments of the present disclosure, or the electronic device integrating the portrait segmentation device. The portrait segmentation device may be implemented in hardware or software. The electronic device may be a smart phone, a tablet computer, a palmtop computer, a notebook computer, a desktop computer, or other devices equipped with a processor and capable of processing. The processor includes but is not limited to a general-purpose processor, a customized processor, etc.

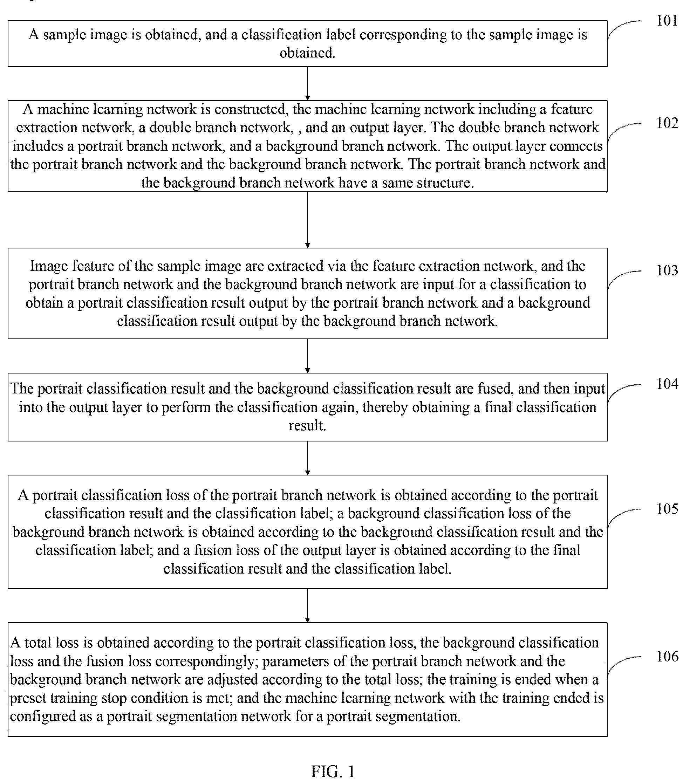

As shown in FIG. 1, FIG. 1 is a schematic flowchart of a model training method according to an embodiment of the present disclosure. A process of the model training method according to the embodiment of the present disclosure may be illustrated as follows.

At block 101, a sample image is obtained, and a classification label corresponding to the sample image is obtained.

The sample image may be any image including a portrait. The classification label is configured to describe whether any pixel in the sample image belongs to a portrait part or a background part.

For example, the electronic device may capture multiple images including portraits as the sample image from the Internet, and receive an annotation data of the obtained sample image to obtain the classification label of the sample image. The classification label is configured to describe that each pixel in the sample image belongs to the portrait or the background part of the sample image.

At block 102, a machine learning network is constructed. The machine learning network includes a feature extraction network, a double branch network, and an output layer. The double branch network includes a portrait branch network, a background branch network. The output layer connects the portrait branch network and the background branch network. The portrait branch network and the background branch network have a same architecture.

In some embodiments of the present disclosure, considering that the portrait and the background are very different in both high-level abstract information and shallow-level detailed pixel position information, a particular network may be very suitable for learning a certain category of information. However, the particular network may not be applied to all categories, especially under an interference of messy backgrounds. Therefore, according to the present disclosure, a task of the portrait segmentation is split. The double branch architecture is configured to learn an image information. The two branches have the same architecture, but process different tasks. One of the branches tends to learn a background information in the image, whereas the other tends to learn a portrait information in the image.

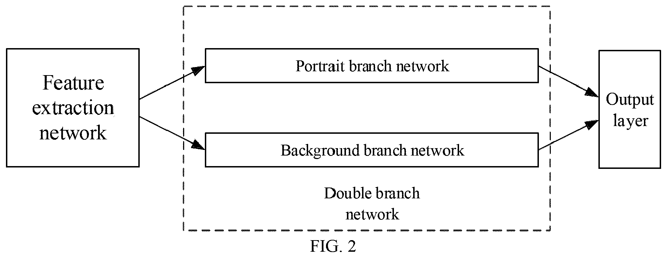

In some embodiments of the present disclosure, the machine learning network including the feature extraction network and the double branch network is constructed by the electronic device as a basic network for training. As shown in FIG. 2, the feature extraction network is configured to extract a shallow feature information of the image. The double branch network includes the portrait branch network for learning the portrait information, the background branch network for learning the background information, and the output layer fusing the shallow feature information, the portrait information and the background information.

At block 103, image features of the sample image are extracted via the feature extraction network, and the portrait branch network and the background branch network are input for a classification to obtain a portrait classification result output by the portrait branch network and a background classification result output by the background branch network.

The feature extraction network may be any known feature extraction network, such as visual geometry group network (VGG), mobile network (MobileNet), etc., to extract features on the input image as an input of the branch networks subsequently. The feature extraction network does not change the scale of the image as a constraint (that is, no up- or down-sampling effect is generated on the image), and those with ordinary skills in the art may select a suitable feature extraction network according to actual needs.

After the machine learning network composed of the feature extraction network and the double branch network is constructed, the electronic device may use the obtained sample image to train the constructed machine learning network.

The electronic device inputs the sample image into the feature extraction network to perform the feature extraction, thereby obtaining the image features of the sample image. For example, the image features extracted by the feature extraction network are the pixel position information in shallow-level of the sample image.

The extracted image features are input into the portrait branch network to perform the classification, thereby obtaining the portrait classification result output by the portrait branch network. The extracted image features are input into the background branch network to perform the classification, thereby obtaining the background classification result output by the background branch network.

At block 104, the portrait classification result and the background classification result are fused, and then input into the output layer to perform the classification again, thereby obtaining a final classification result.

In some embodiments of the present disclosure, the output layer is configured to perform the classification based on the portrait classification result of the portrait branch network and the background classification result of the background branch network again, thereby obtaining the final classification result combining the portrait classification result and the background classification result. The final classification result is configured to describe that each pixel position in the sample image belongs to the portrait part or the background part of the sample image. The output layer may be a separate convolution unit, including but not limited to a common convolution unit and a hollow convolution unit.

For example, a Concat method may be configured by the electronic device to fuse the portrait classification result and the background classification result, and then input to the output layer to perform the classification again, thereby obtaining the corresponding final classification result.

At block 105, a portrait classification loss of the portrait branch network is obtained according to the portrait classification result and the classification label; a background classification loss of the background branch network is obtained according to the background classification result and the classification label; and a fusion loss of the output layer is obtained according to the final classification result and the classification label.

The electronic device obtains the portrait classification loss of the portrait branch network according to the portrait classification result output by the portrait branch network and the classification label of the sample image, obtains the background classification loss of the background branch network according to the portrait classification result output by the background branch network and the classification label of the sample image, and obtains the fusion loss of the output layer according to the final classification result output by the output layer and the classification label of the sample image.

At block 106, a total loss is obtained according to the portrait classification loss, the background classification loss and the fusion loss correspondingly; parameters of the portrait branch network and the background branch network are adjusted according to the total loss; the training is ended when a preset training stop condition is met; and the machine learning network with the training ended is configured as a portrait segmentation network for the portrait segmentation.

The total loss of the corresponding machine learning network obtained by the electronic device according to the obtained portrait classification loss, the background classification loss and the fusion loss may be expressed as:

$$L_{total} = L_{fusion} + L_{background} + L_{portrait};$$

$L_{total}$ represents the total loss, $L_{fusion}$ represents the fusion loss, $L_{background}$ represents the background classification loss, and $L_{portrait}$ represents the portrait classification loss.

It should be noted that in some embodiments of the present disclosure, a goal of the model training is to minimize the total loss. Therefore, after determining the total loss each time, the parameters of the portrait branch network and the background branch network are adjusted for minimizing the total loss.

As described above, by repeating blocks 101 to 106, the parameters of the portrait branch network and the background branch network are continuously adjusted until the training ended when the preset training stop condition is met. The preset training stop condition may be configured by those with ordinary skills in the art according to actual needs, which is not specifically limited in some embodiments of the present disclosure.

For example, the preset training stop condition is configured to stop the training when the total loss is configured as a minimum value.

For example, the preset training stop condition is configured to stop the training when a number of iterations of the parameters reaches a preset number.

When the preset training stop condition is met, the electronic device determines that the portrait branch network in the machine learning network can accurately classify the portrait in the image, and the background branch network can accurately classify the background in the image. The classification result of the network and that of the background branch network may be fused to split the image into a portrait part and a background part, thereby realizing the segmentation of the portrait. Correspondingly, the electronic device configures the machine learning network with the training ended as the portrait segmentation network for the portrait segmentation.

According to the embodiment as described above of the present disclosure, the sample image and the classification label corresponding to the sample image are obtained. The machine learning network including the feature extraction network and the double branch network are constructed. Based on the obtained sample image and the corresponding classification label, the double branch network is trained. Different learning tasks are assigned to each branch during the training process. One branch is configured as the portrait branch to learn the portrait information in the sample image, and the other branch is configured as the background branch to learn the background information in the sample image. Therefore, when the training is completed, the portrait branch network may accurately classify the portrait in the image, and the background branch network may accurately classify the background in the image. The classification results of the two may be fused, such that the image is split into a portrait part and a background part, realizing the portrait segmentation without resorting to related hardware. In this way, the hardware cost of the electronic device to realize the portrait segmentation is reduced.

In some embodiments, the portrait branch network includes several portrait network segments with a same architecture, and the number of the portrait network segments is N. The background branch network includes several background network segments with the same architecture, and the number of the background network segments is N. The inputting the image features into the portrait branch network and the background branch network to perform the classification includes operations as follows.

(1) The image features are classified based on a first portrait network segment to obtain a first portrait classification result, and the image features are classified based on a first background network segment to obtain a first background classification result.

(2) The first portrait classification result, the first background classification result and the image features are fused to obtain a first group of fusion features; the first group of fusion features is classified based on a second portrait network segment to obtain a second portrait classification result; and the first group of fusion features is classified based on a second background network segment to obtain a second background classification result.

(3) The second portrait classification result, the second background classification result, and the image features are fused to obtain a second group of fusion features. Operations are repeated until a Nth group of fusion features are classified based on a N-1th portrait network segment to obtain a Nth portrait classification result; and the Nth group of fusion features are classified based on a N-1th background network segment to obtain a Nth background classification result.

(4) The Nth portrait classification result is configured as the portrait classification result of the portrait branch network, and the Nth background classification result is configured as the background classification result of the background branch network.

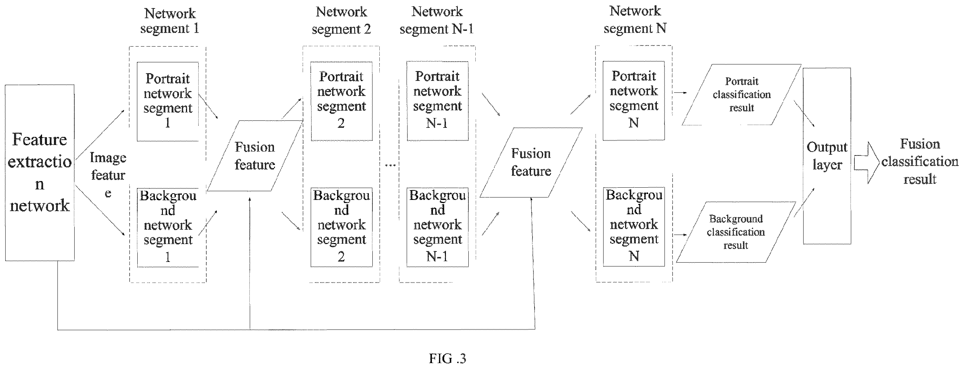

It should be noted that, in some embodiments of the present disclosure, the portrait branch network includes several portrait network segments with the same architecture, and the number of the portrait network segments is N. The background branch network includes several background network segments with the same architecture, and the number of the background network segments is N. N is a positive integer greater than 2 and can be determined by those with ordinary skill in the art according to actual needs. For example, as shown in FIG. 3, the portrait branch network includes several portrait network segments with the same architecture, the number of the portrait network segments being N. The portrait network segments are portrait network segment 1 to portrait network segment N, respectively. Correspondingly, the background branch network includes several background network segments with the same architecture, the number of the background network segments being N. The background network segments are background network segment 1 to background network segment N, respectively. The portrait network segment 1 and the background network segment 1 define a network segment 1, the portrait network segment 2 and the background network segment 2 define a network segment 2, and so on. The portrait network segment N and the background network segment N define a network segment N. In other words, the double branch network according to some embodiments of the present disclosure may be regarded as being composed of several network segments, such as the network segment 1 to the network segment N shown in FIG. 3. Each of the network segments includes a portrait network segment and a background network segment correspondingly.

For example, the network architecture shown in FIG. 3 will be described.

In some embodiments of the present disclosure, the electronic device inputs the sample image to the feature extraction network to perform the feature extraction, thereby obtaining the image features of the sample image. The extracted image features are input to the portrait network segment 1 in the network segment 1 to perform the portrait classification, thereby obtaining the portrait classification result output by the portrait network segment 1. The extracted image features are input to the background network segment 1 in the network segment 1 to perform the background classification, thereby obtaining the background classification result output by the background network segment 1. The portrait classification result output by the portrait network segment 1, the background classification result output by the background network segment 1 and the extracted image features are fused to obtain the fusion features as the fusion features output by the network segment 1. The fusion features output by the network segment 1 are input to the portrait network segment 2 in the network segment 2 to perform the portrait classification, thereby obtaining the portrait classification result output by the portrait network segment 2. The fusion features output by the network segment 1 are input to the background network segment 2 in the network segment 2 to perform the background classification, thereby obtaining the background classification result output by the background network segment 2. The portrait classification result output by the portrait network segment 2 and the background classification result output by the background network segment 2 and the extracted image features are fused to obtain new fusion features as the fusion features output by network segment 2. Operations are repeated until the portrait classification result output by the portrait network segment N in the network segment N is obtained through the classification according to the fusion features output by the network segment N-1, and until the background classification result output by the background network segment N in the network segment N is obtained through the classification according to the fusion features output by the network segment N-1. The portrait classification result output by the portrait network segment N is configured as the portrait classification result of the portrait branch network, and the background classification result output by the background network segment N is configured as the background classification result of the background branch network. Finally, after the portrait classification result output by the portrait branch network and the background classification result output by the background branch network are obtained, the portrait classification result and the background classification result are fused and input to the output layer to perform the classification again, thereby obtaining a final classification result.

In the embodiments of the present disclosure, the feature extraction is preliminarily performed through the feature extraction network, thereby not only effectively reducing the amount of calculation as a whole, but also repeatedly providing more detailed pixel position information for the network segment (constituted by the portrait network segment and the background network segment) in the double branch network (that is, the image features originally extracted by the feature extraction network). In this way, the machine learning network may obtain more detailed information with a lower amount of calculation.

In some embodiments, the portrait network segment includes an encoding module, a decoding module connected to the encoding module, and a classification module connected to the decoding module. The inputting the fusion features into the portrait network segment to perform the classification includes operations illustrated as follows.

(1) The fusion features are input into the encoding module to perform the feature extraction and a down-sampling, thereby obtaining encoded features.
(2) The encoded features are input into the decoding module to perform the feature extraction and an up-sampling, thereby obtaining decoded features with a scale being same as that of the fusion features.
(3) The decoded features are input into the classification module to perform the classification, thereby obtaining the portrait classification result output by the portrait network segment.

It should be noted that, in the embodiments of the present disclosure, the architecture of the background network segment and that of the portrait network segment are the same. However, the background network segment and the portrait network segment do not share parameters. The portrait network segment will be described as an example.

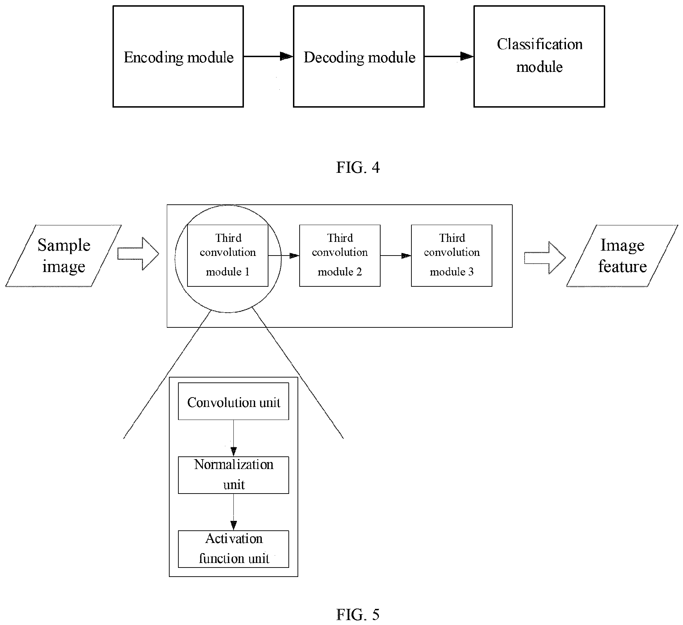

As shown in FIG. 4, each portrait network segment is composed of three parts, namely the encoding module, the decoding module connected to the encoding module, and the classification module connected to the decoding module.

When the electronic device inputs the fusion features into the portrait network segment to perform the classification, the fusion features are input into the encoding module to perform the feature extraction and the down-sampling, thereby obtaining the encoded features. Then the encoded features are input into the decoding module to further perform the feature extraction and the up-sampling, thereby obtaining the decoded features with the scale being same as that of the fusion features. Finally, the decoded features are input into the classification module to perform the classification, and the result output by the classification module is configured as the portrait classification result output by the portrait network segment.

In some embodiments, the encoding module includes a plurality of first convolution modules with a same architecture and connected in sequence. Each of the first convolution modules includes a convolution unit with a convolution kernel size of $3 \times 3$ and a step size of 2, a normalization unit and an activation function unit connected in sequence.

The decoding module includes a plurality of second convolution modules with a same architecture and connected in sequence. Each of the second convolution modules includes a convolution unit with a convolution kernel size of $3 \times 3$ and a step size of 1, the normalization unit, the activation function unit, and an up-sampling unit with a sampling multiple of 2 connected in sequence;

The classification module includes a normalization layer with an output interval of [-1, 1].

In the embodiments of the present disclosure, an output interval of the normalization unit in the first convolution modules is not limited, and those with ordinary skills in the art can obtain empirical values according to actual needs. Similarly, an activation function configured by the activation function unit in the first convolution module is not limited, and can be selected by those with ordinary skills in the art according to actual needs. The activation function includes but is not limited to ReLU and ReLU6.

In addition, in the embodiments of the present disclosure, an output interval of the normalization unit in the second convolution modules is not limited, and those with ordinary skills in the art can obtain empirical values according to actual needs. Similarly, an activation function configured by the activation function unit in the second convolution module is not limited, and is selected as the same activation function as the activation function unit in the first convolution module. The activation function configured by the activation function unit in the second convolution module can be selected by those with ordinary skills in the art according to actual needs, including but not limited to ReLU and ReLU6.

It should be noted that the number of the first convolution module and that of the second convolution module are the same, and those with ordinary skills in the art can set the number of the first convolution module and that of the second convolution module according to actual needs. For example, in some embodiments of the present disclosure, the number of the first convolution module and that of the second convolution module may be set to 3. In this way, in an internal of each network segment (including the portrait network segment and the background network segment), three down-sampling process are configured. A multi-scale feature extraction and three up-sampling processes are performed on the input fusion features, restoring the scale and further extracting the feature. In this way, through a stacking of multiple network segments, a further deep-level extraction of the image features may be achieved. At the same time, with the down-sampling and up-sampling processes in the internal of the network segment, a multi-scale feature extraction may be further achieved, thereby further improving segmentation capabilities of the machine learning network.

Based on the internal architecture of the above network segment, a loss may be calculated as follows.

Assume that a batch size for training the machine learning network, is configured to M (that is, M sample images are required to iterate through the parameters of the double branch network once), G (i, j) is a classification label, G (i, j) = 1 indicates a pixel position (i , j) belongs to the portrait part of the sample image, and G (i, j) =-1 indicates the pixel position (i, j) belongs to the background part of the sample image. A portrait classification loss may be expressed as follows.

$$L_{portrait} = \frac{1}{M}\sum_M(\sum_s(\sum_{(i,j)} Feature(i,j) - 1)^2);$$

Where s represents different portrait network segments, (i, j) represents a pixel position of the portrait part in the image, and Feature (i, j) represents a value of a portrait classification result of a portrait network segment in the pixel position (i, j), and a range of the value is [-1, 1]. That is, the portrait classification loss is calculated based on the batch size for training the machine learning network, and a value of each portrait classification result of each portrait network segment in each pixel position.

Similarly, a background classification loss may be expressed as follows.

$$L_{background} = \frac{1}{M}\sum_M(\sum_s(\sum_{(i,j)} Feature(i,j) - 1)^2);$$

Where s represents different background network segments, (i, j) samples the pixel position of the background part in the image, and Feature (i, j) represents the value of the background classification result of the background network segment in (i, j), a range of the value being [-1, 1]. That is, the background classification loss is calculated based on the batch size for training the machine learning network, and a value of each background classification result of each portrait network segment in each pixel position.

$$L_{output} = \frac{1}{M}\sum_M(mix(i,j) - G)^2;$$

Where (i, j) samples the pixel position of the portrait part in the image, mix (i, j) represents the value of the final classification result of the output layer in (i, j), G takes 1 when (i, j) belongs to the portrait part in the sample image, and G takes -1 when (i, j) belongs to the background part in the sample image.

In some embodiments, the feature extraction network includes multiple third convolution modules with a same architecture and connected in sequence. Each of the third convolution modules includes a convolution unit, a normalization unit, and an activation function unit connected in sequence.

It should be noted that, in the embodiments of the present disclosure, the number of third convolution modules is not specifically limited, and can be selected by those with ordinary skills in the art according to actual needs.

The third convolution module includes a convolution unit, a normalization unit and an activation function unit connected in sequence.

For example, as shown in FIG. 5, the feature extraction network in the embodiments of the present disclosure is composed of three third convolution modules with a same architecture, and each of the third convolution modules includes a convolution unit, a normalization unit, and an activation function unit connected in sequence. In the embodiments of the present disclosure, a type of the convolution unit in the third convolution modules is not specifically limited, including but not limited to an ordinary convolution unit and a hollow convolution unit, etc. In addition, an output interval of the normalization unit in the third convolution modules is not limited, and those with ordinary skills in the art can obtain empirical values according to actual needs. Similarly, an activation function configured by the activation function unit in the third convolution module is not limited, and can be selected by those with ordinary skills in the art according to actual needs. The activation function includes but is not limited to ReLU and ReLU6.

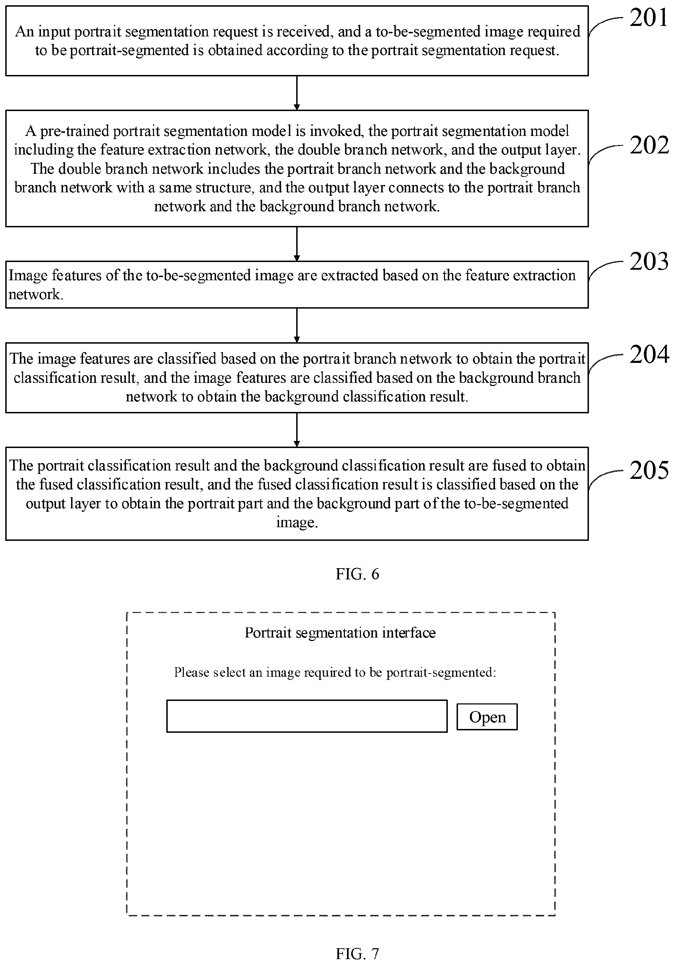

As shown in FIG. 6. FIG. 6 is a schematic flowchart of a portrait segmentation method according to an embodiment of the present disclosure. A process of the portrait segmentation method provided by the embodiments of the present disclosure may be as follows.

At block 201, an input portrait segmentation request is received, and a to-be-segmented image required to be portrait-segmented is obtained according to the portrait segmentation request.

It should be noted that the embodiments of the present disclosure will be described from the perspective of the electronic device. The electronic device may receive the portrait segmentation request in many different ways.

For example, the electronic device may receive the input portrait segmentation request through a portrait segmentation interface including a request input interface, as shown in FIG. 7. The request input interface may be in a form of an input box, and users may enter an identification information of the image to be segmented in the request input interface in the form of an input box, and enter a confirmation information (such as directly pressing the Enter key of the keyboard) to input the portrait segmentation request. The portrait segmentation request carries the identification information of the image required to be portrait-segmented. Correspondingly, the electronic device may determine the to-be-segmented image required to be portrait-segmented according to the identification information in the received portrait segmentation request.

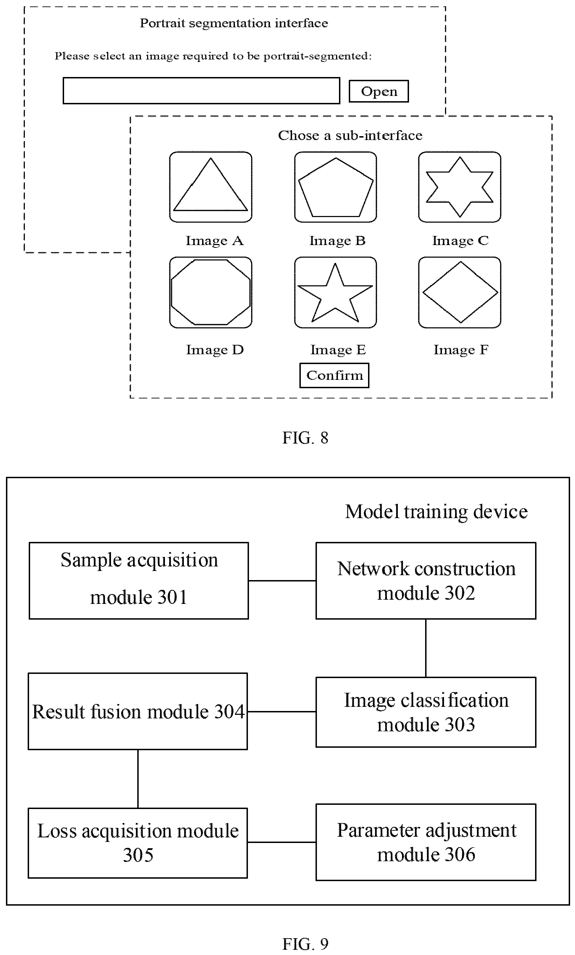

For example, the portrait segmentation interface shown in FIG. 7 further includes an open control. When the electronic device detects that the open control is triggered, a selection sub-interface may be overlaid and displayed on the portrait segmentation interface, as shown in FIG. 8. The selection sub-interface provides users with thumbnails of images capable of being portrait-segmented, such as thumbnails of images A, B, C, D, E, and F. Users may find and select a thumbnail of an image required to be portrait-segmented. After selecting the thumbnail of the image required to be portrait-segmented, users may trigger a confirmation control provided by the selection sub-interface to input the portrait segmentation request to the electronic device. The portrait segmentation request is associated with the thumbnail of the image selected by users, and instructs the electronic device to use the image selected by users as the image required to be portrait-segmented.

In addition, ordinary users in the art may also configure other specific implementation methods for inputting the portrait segmentation request according to actual needs, which is not specifically limited herein.

When receiving the input portrait segmentation request, the electronic device determines the to-be-segmented image required to be portrait-segmented according to the identification information carried in the portrait segmentation request, and obtains the to-be-segmented image.

At block 202, a pre-trained portrait segmentation model is invoked. The portrait segmentation model includes the feature extraction network, the double branch network, and the output layer. The double branch network includes the portrait branch network and the background branch network with a same architecture. The output layer is connected to the portrait branch network and the background branch network.

It should be noted that, in the embodiments of the present disclosure, the model training method provided in the above embodiments is configured to pre-train the portrait segmentation model. As shown in FIG. 2, the portrait segmentation model includes the feature extraction network and the double branch network. The double branch network includes the portrait branch network and the background branch network with a same architecture, and the output layer connected to the portrait branch network and the background branch network.

After the electronic device obtains the to-be-segmented image required to be portrait-segmented according to the received portrait segmentation request, the pre-trained portrait segmentation model is invoked to perform the portrait segmentation on the to-be-segmented image.

At block 203, the image features of the to-be-segmented image are extracted based on the feature extraction network.

The electronic device inputs the sample image into the feature extraction network to perform the feature extraction, thereby obtaining the image features of the sample image. For example, during the training process of the portrait segmentation model, the feature extraction network is configured to extract the pixel position information in shallow-level of the to-be-segmented image.

Correspondingly, the electronic device extracts the pixel position information in shallow-level of the to-be-segmented mage based on the feature extraction network as the image features.

At block 204, the image features are classified based on the portrait branch network to obtain the portrait classification result, and the image features are classified based on the background branch network to obtain the background classification result.

According to the present disclosure, during the training process of the portrait segmentation model, the portrait branch network is configured for the portrait classification, and the background branch network is configured for the background classification. Correspondingly, after extracting the image features of the to-be-segmented image based on the feature extraction network, the electronic device further classifies the image features based on the portrait branch network to obtain the portrait classification result, and classifies the image features based on the background branch network to obtain the background classification result.

At block 205, the portrait classification result and the background classification result are fused to obtain the fused classification result, and the fused classification result is classified based on the output layer to obtain the portrait part and the background part of the to-be-segmented image.

The portrait segmentation method is pre-trained through the model training method as described in foregoing embodiments of the present disclosure.

After obtaining the portrait classification result of the portrait branch network and the background classification result output by the background branch network, the electronic device fuse the portrait classification result and the background classification result to obtain the fusion classification result, and finally input and output the fusion classification result again to obtain the final classification result. The final classification result is configured to describe the position of each pixel in the to-be-segmented image belongs to the portrait part or the background part of the to-be-segmented image, thereby achieving the portrait segmentation of the to-be-segmented image, and obtaining the portrait part and the background part of the to-be-segmented image.

In some embodiments, the portrait branch network includes several portrait network segments with a same architecture, and the number of the portrait network segments is N. The background branch network includes several background network segments with a same architecture, and the number of the background network segments is N. The image features are classified based on portrait branch network to obtain the portrait classification result, and the image features are classified based on background branch network to obtain the background classification result, including operations as follows.

(1) The image features are classified based on a first portrait network segment to obtain a first portrait classification result, and the image features are classified based on a first background network segment to obtain a first background classification result.

(2) The first portrait classification result, the first background classification result and the image features are fused to obtain a first group of fusion features; the first group of fusion features is classified based on a second portrait network segment to obtain a second portrait classification result; and the first group of fusion features is classified based on a second background network segment to obtain a second background classification result.

(3) The second portrait classification result, the second background classification result, and the image features are fused to obtain a second group of fusion features. Operations are repeated until a Nth group of fusion features is classified based on a N-1th portrait network segment to obtain a Nth portrait classification result; and the Nth group of fusion features is classified based on a N-1th background network segment to obtain a Nth background classification result.

(4) The Nth portrait classification result is configured as the portrait classification result of the portrait branch network, and the Nth background classification result is configured as the background classification result of the background branch network.

It should be noted that, in some embodiments of the present disclosure, the portrait branch network includes several portrait network segments with the same architecture, and the number of the portrait network segments is N. The background branch network includes several background network segments with the same architecture, and the number of the background network segments is N. N is a positive integer greater than 2 and can be determined by those with ordinary skill in the art according to actual needs. For example, as shown in FIG. 3, the portrait branch network includes several portrait network segments with the same architecture, the number of the portrait network segments being N. The portrait network segments are portrait network segment 1 to portrait network segment N, respectively. Correspondingly, the background branch network includes several background network segments with the same architecture, the number of the background network segments being N. The background network segments are background network segment 1 to background network segment N, respectively. The portrait network segment 1 and the background network segment 1 define a network segment 1, the portrait network segment 2 and the background network segment 2 define a network segment 2, and so on. The portrait network segment N and the background network segment N define a network segment N. In other words, the double branch network according to some embodiments of the present disclosure may be regarded as being composed of several network segments, such as the network segment 1 to the network segment N shown in FIG. 3. Each of the network segments includes a portrait network segment and a background network segment correspondingly.

For example, the network architecture shown in FIG. 3 will be described.

In some embodiments of the present disclosure, the electronic device inputs the sample image to the feature extraction network to perform the feature extraction, thereby obtaining the image features of the sample image. The extracted image features are input to the portrait network segment 1 in the network segment 1 to perform the portrait classification, thereby obtaining the portrait classification result output by the portrait network segment 1. The extracted image features are input to the background network segment 1 in the network segment 1 to perform the background classification, thereby obtaining the background classification result output by the background network segment 1. The portrait classification result output by the portrait network segment 1, the background classification result output by the background network segment 1 and the extracted image features are fused to obtain the fusion features as the fusion features output by the network segment 1. The fusion features output by the network segment 1 are input to the portrait network segment 2 in the network segment 2 to perform the portrait classification, thereby obtaining the portrait classification result output by the portrait network segment 2. The fusion features output by the network segment 1 are input to the background network segment 2 in the network segment 2 to perform the background classification, thereby obtaining the background classification result output by the background network segment 2. The portrait classification result output by the portrait network segment 2 and the background classification result output by the background network segment 2 and the extracted image features are fused to obtain new fusion features as the fusion features output by network segment 2. Operations are repeated until the portrait classification result output by the portrait network segment N in the network segment N is obtained through the classification according to the fusion features output by the network segment N-1, and until the background classification result output by the background network segment N in the network segment N is obtained through the classification according to the fusion features output by the network segment N-1. The portrait classification result output by the portrait network segment N is configured as the portrait classification result of the portrait branch network, and the background classification result output by the background network segment N is configured as the background classification result of the background branch network. Finally, after the portrait classification result output by the portrait branch network and the background classification result output by the background branch network are obtained, the portrait classification result and the background classification result are fused and input to the output layer to perform the classification again, thereby obtaining a final classification result.

In the embodiments of the present disclosure, the feature extraction is preliminarily performed through the feature extraction network, thereby not only effectively reducing the amount of calculation as a whole, but also repeatedly providing more detailed pixel position information for the network segment (constituted by the portrait network segment and the background network segment) in the double branch network (that is, the image features originally extracted by the feature extraction network). In this way, the machine learning network may obtain more detailed information with a lower amount of calculation.

In some embodiments, the portrait network segment includes an encoding module, a decoding module connected to the encoding module, and a classification module connected to the decoding module. The classifying the first group of fusion features based on the second portrait network segment to obtain the second portrait classification result includes operations illustrated as follows.

(1) The feature extraction and the down-sampling are performed on the first group of fusion features based on the encoding module in the second portrait network segment, thereby obtaining the encoded features.
(2) The feature extraction and the up-sampling are performed on the encoded features based on the decoding module in the second portrait network segment, thereby obtaining the decoded features with a scale being same as that of the first group of fusion features.
(3) The classification is performed on the decoded features based on the classification module in the second portrait network segment, thereby obtaining the second portrait classification result.

It should be noted that, in the embodiments of the present disclosure, the architecture of the background network segment and that of the portrait network segment are the same. However, the background network segment and the portrait network segment do not share parameters. The classifying the first group of fusion features based on the second portrait network segment to obtain the second portrait classification result is configured as an example in the present disclosure, and others are similar.

It should be noted that, as shown in FIG. 4, each portrait network segment in the present disclosure is composed of three parts, namely an encoding module, a decoding module connected to the encoding module, and a classification module connected to the decoding module. The encoding module is configured to further perform the feature extraction and the down-sampling on the input feature to obtain the encoded features, and the decoding module is configured to further perform the feature extraction and the up-sampling on the encoded features to obtain the decoded features with the scale being same as that of the input feature. The classification module is configured to classify the decoded features, and the classification result is configured as the portrait classification result of the corresponding the portrait network segment.

Correspondingly, when the electronic device classifies the first group of fusion features based on the second portrait network segment to obtain the second portrait classification result, the feature extraction and the down-sampling are performed on the first group of fusion features based on the encoding module of the second portrait network segment to obtain the corresponding encoded features. Then the feature extraction and the up-sampling are performed on the encoded features based on the decoding module of the second portrait network segment to obtain the decoded features with the scale being same as that of the first group of fusion features. Finally, the decoded features are classified based on the classification module of the second portrait network segment to obtain the second portrait classification result of the second portrait network segment.

In some embodiments, the encoding module includes a plurality of first convolution modules with a same architecture and connected in sequence. Each of the first convolution modules includes a convolution unit with a convolution kernel size of $3\times3$ and a step size of 2, a normalization unit and an activation function unit connected in sequence.

In some embodiments, the decoding module includes a plurality of second convolution modules with a same architecture and connected in sequence. Each of the second convolution modules includes a convolution unit with a convolution kernel size of $3\times3$ and a step size of 1, the normalization unit, the activation function unit, and an up-sampling unit with a sampling multiple of 2 connected in sequence;

In some embodiments, the classification module includes a normalization layer with an output interval of [-1, 1].

In the embodiments of the present disclosure, an output interval of the normalization unit in the first convolution modules is not limited, and those with ordinary skills in the art can obtain empirical values according to actual needs. Similarly, an activation function configured by the activation function unit in the first convolution module is not limited, and can be selected by those with ordinary skills in the art according to actual needs. The activation function includes but is not limited to ReLU and ReLU6.

In addition, in the embodiments of the present disclosure, an output interval of the normalization unit in the second convolution modules is not limited, and those with ordinary skills in the art can obtain empirical values according to actual needs. Similarly, an activation function configured by the activation function unit in the second convolution module is not limited, and is selected as the same activation function as the activation function unit in the first convolution module. The activation function configured by the activation function unit in the second convolution module can be selected by those with ordinary skills in the art according to actual needs, including but not limited to ReLU and ReLU6.

It should be noted that the number of the first convolution module and that of the second convolution module are the same, and those with ordinary skills in the art can set the number of the first convolution module and that of the second convolution module according to actual needs. For example, in some embodiments of the present disclosure, the number of the first convolution module and that of the second convolution module may be set to 3. In this way, in an internal of each network segment (including the portrait network segment and the background network segment), three down-sampling process are configured. A multi-scale feature extraction and three up-sampling processes are performed on the input fusion features, restoring the scale and further extracting the feature. In this way, through a stacking of multiple network segments, a further deep-level extraction of the image features may be achieved. At the same time, with the down-sampling and up-sampling processes in the internal of the network segment, a multi-scale feature extraction may be further achieved, thereby further improving segmentation capabilities of the machine learning network.

In some embodiments, the feature extraction network includes multiple third convolution modules with a same architecture and connected in sequence. Each of the third convolution modules includes a convolution unit, a normalization unit, and an activation function unit connected in sequence.

It should be noted that, in the embodiments of the present disclosure, the number of third convolution modules is not specifically limited, and can be selected by those with ordinary skills in the art according to actual needs.

The third convolution module includes a convolution unit, a normalization unit and an activation function unit connected in sequence.

For example, as shown in FIG. 5, the feature extraction network in the embodiments of the present disclosure is composed of three third convolution modules with a same architecture, and each of the third convolution modules includes a convolution unit, a normalization unit, and an activation function unit connected in sequence. In the embodiments of the present disclosure, a type of the convolution unit in the third convolution modules is not specifically limited, including but not limited to an ordinary convolution unit and a hollow convolution unit, etc. In addition, an output interval of the normalization unit in the third convolution modules is not limited, and those with ordinary skills in the art can obtain empirical values according to actual needs. Similarly, an activation function configured by the activation function unit in the third convolution module is not limited, and can be selected by those with ordinary skills in the art according to actual needs. The activation function includes but is not limited to ReLU and ReLU6.

In some embodiments, operations after the inputting the to-be-segmented image into the portrait segmentation model to perform the portrait segmentation, thereby obtaining the portrait part and the background part of the to-be-segmented image also include as follows.

A preset image processing operation is performed on the portrait portion or the background portion obtained by segmentation.

For example, the background part is blurred, the background part is replaced with a preset background template, and a portrait color retention is performed on the portrait part.

In some embodiments, a model training device is also provided. As shown in FIG. 9, FIG. 9 is a schematic structural view of a model training device according to an embodiment of the present disclosure. The model training device is applied to electronic device. The model training device includes a sample acquisition module 301, a network construction module 302, an image classification module 303, a result fusion module 304, a loss acquisition module 305, and a parameter adjustment module 306.

The sample acquisition module 301 is configured to obtain the sample image and obtain the classification label corresponding to the sample image.

The network construction module 302 is configured to construct the machine learning network. The machine learning network includes the feature extraction network and the double branch network. The double branch network includes the portrait branch network and the background branch network with a same architecture, and the output layer connected to the portrait branch network and the background branch network.

The image classification module 303 is configured to extract the image features of the sample image through the feature extraction network, to input the portrait branch network and the background branch network for performing the classification, and to obtain the portrait classification result output by the portrait branch network and the background classification result output by the background branch network.

The result fusion module 304 is configured to fuse the portrait classification result and the background classification result, and input to the output layer for performing the classification again, thereby obtaining the final classification result.

The loss acquisition module 305 is configured to obtain the portrait classification loss of the portrait branch network according to the portrait classification result and the classification label, to obtain the background classification loss of the background branch network according to the background classification result and the classification label, and to obtain the fusion loss of the output layer based on the fusion classification result and the classification label

The parameter adjustment module 306 is configured to obtain the corresponding total loss according to the portrait classification loss, the background classification loss, and the fusion loss; and to adjust the parameter of the portrait branch network and that of the background branch network according to the total loss. The training is ended until the preset training stop condition is met. The machine learning network with the training ended is configured as a portrait segmentation network for the portrait segmentation.

In some embodiments, the portrait branch network includes several portrait network segments with a same architecture, and the number of the portrait network segments is N. The background branch network includes several background network segments with a same architecture, and the number of the background network segments is N. When inputting the image features into the portrait branch network and the background branch network for the classification, the image classification module 303 is configured to perform operations as follows.

The image features are classified based on a first portrait network segment to obtain a first portrait classification result, and the image features are classified based on a first background network segment to obtain a first background classification result.

The first portrait classification result, the first background classification result and the image features are fused to obtain a first group of fusion features; the first group of fusion features is classified based on a second portrait network segment to obtain a second portrait classification result; and the first group of fusion features is classified based on a second background network segment to obtain a second background classification result.

The second portrait classification result, the second background classification result, and the image features are fused to obtain a second group of fusion features. Operations are repeated until a Nth group of fusion features is classified based on a N-1th portrait network segment to obtain a Nth portrait classification result; and the Nth group of fusion features is classified based on a N-1th background network segment to obtain a Nth background classification result.

The Nth portrait classification result is configured as the portrait classification result of the portrait branch network, and the Nth background classification result is configured as the background classification result of the background branch network.

In some embodiments, the portrait network segment includes an encoding module, a decoding module connected to the encoding module, and a classification module connected to the decoding module. When inputting the fusion features into the portrait network segment to perform the classification, the image classification module 303 is configured to perform operations as follows.

The fusion features are input into the encoding module to perform the feature extraction and a down-sampling, thereby obtaining encoded features.

The encoded features are input into the decoding module to perform the feature extraction and an up-sampling, thereby obtaining decoded features with a scale being same as that of the fusion features.

The decoded features are input into the classification module to perform the classification, thereby obtaining the portrait classification result output by the portrait network segment.

In some embodiments, the encoding module includes a plurality of first convolution modules with a same architecture and connected in sequence. Each of the first convolution modules includes a convolution unit with a convolution kernel size of 3×3 and a step size of 2, a normalization unit and an activation function unit connected in sequence.

In some embodiments, the decoding module includes a plurality of second convolution modules with a same architecture and connected in sequence. Each of the second convolution modules includes a convolution unit with a convolution kernel size of 3×3 and a step size of 1, the normalization unit, the activation function unit, and an up-sampling unit with a sampling multiple of 2 connected in sequence.

In some embodiments, the classification module includes a normalization layer with an output interval of [-1, 1].

In some embodiments, the feature extraction network includes multiple third convolution modules with a same architecture and connected in sequence. Each of the third convolution modules includes a convolution unit, a normalization unit, and an activation function unit connected in sequence.

It should be noted that the model training device provided by the embodiments of the present disclosure and the model training method in the above embodiment belong to the same concept. Any method provided in the model training method embodiments may be run on the model training device. Specific implementations are detailedly described in the above embodiments, and will not be repeated here.

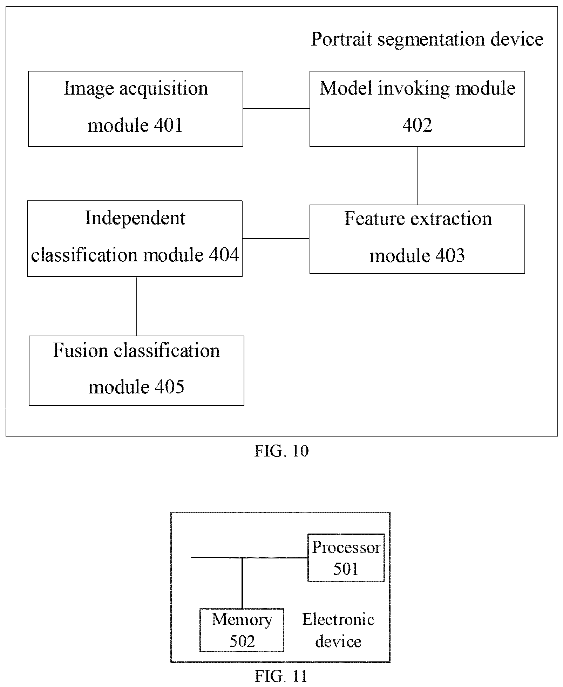

In some embodiments, a portrait segmentation device is also provided. As shown in FIG. 10, FIG. 10 is a schematic structural view of a portrait segmentation device according to an embodiment of the present disclosure. The portrait segmentation device may be applied to the electronic device. The portrait segmentation device may include an image acquisition module 401, a model invoking module 402, a feature extraction module 403, an independent classification module 404, and a fusion classification module 405.

The image acquisition module 401 is configured to receive the input portrait segmentation request, and acquire the to-be-segmented image required to be portrait-segmented according to the portrait segmentation request.

The model invoking module 402 includes the model training device as described in foregoing embodiments and is configured to invoke the pre-trained portrait segmentation model. The portrait segmentation model includes the feature extraction network and the double branch network. The double branch network includes the portrait branch network and the background branch network with a same architecture, and the output layer connected to the portrait branch network and the background branch network.

The feature extraction module 403 is configured to extract the image features of the to-be-segmented image based on the feature extraction network.

The independent classification module 404 is configured to classify the image features based on the portrait branch network for obtaining the portrait classification result, and classify the image features based on the background branch network for obtaining the background classification result.

The fusion classification module 405 is configured to fuse the portrait classification result and the background classification result for obtaining the fusion classification result, and classify the fusion classification result based on the output layer for obtaining the portrait part and the background part of the to-be-segmented image.

In some embodiments, the portrait branch network includes several portrait network segments with a same architecture, and the number of the portrait network segments is N. The background branch network includes several background network segments with a same architecture, and the number of the background network segments is N. When the image features are classified based on the portrait branch network for obtaining the portrait classification result, and is classified based on the background branch network for obtaining the background classification result, the independent classification module 404 is configured to perform operations as follows.

The image features are classified based on a first portrait network segment to obtain a first portrait classification result, and the image features are classified based on a first background network segment to obtain a first background classification result.

The first portrait classification result, the first background classification result and the image features are fused to obtain a first group of fusion features; the first group of fusion features is classified based on a second portrait network segment to obtain a second portrait classification result; and the first group of fusion features is classified based on a second background network segment to obtain a second background classification result.

The second portrait classification result, the second background classification result, and the image features are fused to obtain a second group of fusion features. Operations are repeated until a Nth group of fusion features is classified based on a N-1th portrait network segment to obtain a Nth portrait classification result; and the Nth group of fusion features is classified based on a N-1th background network segment to obtain a Nth background classification result.

The Nth portrait classification result is configured as the portrait classification result of the portrait branch network, and the Nth background classification result is configured as the background classification result of the background branch network.

In some embodiments, the portrait network segment includes an encoding module, a decoding module connected to the encoding module, and a classification module connected to the decoding module. When the first group of fusion features is classified according to the second portrait network segment to obtain the second portrait classification result, the independent classification module 404 is configured to perform operations as follows.

The feature extraction and the down-sampling are performed on the first group of fusion features based on the encoding module in the second portrait network segment, thereby obtaining the encoded features.

The feature extraction and the up-sampling are performed on the encoded features based on the decoding module in the second portrait network segment, thereby obtaining the decoded features with a scale being same as that of the first group of fusion features.

The classification is performed on the decoded features based on the classification module in the second portrait network segment, thereby obtaining the second portrait classification result.

In some embodiments, the encoding module includes a plurality of first convolution modules with a same architecture and connected in sequence. Each of the first convolution modules includes a convolution unit with a convolution kernel size of $3 \times 3$ and a step size of 2, a normalization unit and an activation function unit connected in sequence.

In some embodiments, the decoding module includes a plurality of second convolution modules with a same architecture and connected in sequence. Each of the second convolution modules includes a convolution unit with a convolution kernel size of $3 \times 3$ and a step size of 1, the normalization unit, the activation function unit, and an up-sampling unit with a sampling multiple of 2 connected in sequence.

In some embodiments, the classification module includes a normalization layer with an output interval of [-1, 1].

In some embodiments, the feature extraction network includes multiple third convolution modules with a same architecture and connected in sequence. Each of the third convolution modules includes a convolution unit, a normalization unit, and an activation function unit connected in sequence.

It should be noted that the model training device provided by the embodiments of the present disclosure and the model training method in the above embodiment belong to the same concept. Any method provided in the model training method embodiments may be run on the model training device. Specific implementations are detailedly described in the above embodiments, and will not be repeated here.

In some embodiments, an electronic device is also provided. As shown in FIG. 11, the electronic device includes a processor 501 and a memory 502.

The processor 501 according to the embodiments of the present disclosure is a general-purpose processor, such as an ARM architecture processor.

The memory 502 stores a computer program. The memory 502 may be a high-speed random access memory or a non-volatile memory, such as at least one magnetic disk storage device, flash memory device, or other volatile solid-state storage devices.

Correspondingly, the memory 502 may further include a memory controller to provide the processor 501 with an access to the computer program in the memory 502, and to execute the model training method provided in the above embodiments, such as: obtaining the sample image, and obtaining the classification label corresponding to the sample image; constructing the machine learning network, the machine learning network including the feature extraction network and the double branch network, the double branch network including the portrait branch network and the background branch network with a same architecture, and the output layer connected to the portrait branch network and the background branch network; extracting the image features of the sample image through the feature extraction network, inputting the portrait branch network and the background branch network for the classification, and obtaining the portrait classification result output by the portrait branch network and the background classification result output by the background branch network; fusing the portrait classification result and the background classification result, and then inputting the fused result to the output layer for the classification again to obtain the final classification result; obtaining the portrait classification loss of the portrait branch network according to the portrait classification result and the classification label, obtaining the background classification loss of the background branch network according to the background classification result and the classification label, and obtaining the fusion loss of the output layer according to the fusion classification result and the classification label; obtaining the corresponding total loss according to the portrait classification loss, background classification loss and fusion loss, adjusting the parameters of the portrait branch network and the background branch network according to the total loss, and ending the training until the preset training stop condition is met, the machine learning network with the training ended being configured as a portrait segmentation network for the portrait segmentation.

In some embodiments, the portrait segmentation method provided in the above embodiments may be executed, such as: receiving the input portrait segmentation request, and obtaining the to-be-segmented image required to be portrait-segmented according to the portrait segmentation request; invoking the pre-trained portrait segmentation model, the machine learning network including the feature extraction network and the double branch network, the double branch network including the portrait branch network and the background branch network with a same architecture, and the output layer connected to the portrait branch network and the background branch network; extracting the image features of the to-be-segmented image based on the feature extraction network; classifying the image features based on the portrait branch network to obtain the portrait classification result, and classifying the image features based on the background branch network to obtain the background classification result; and fusing the portrait classification result and the background classification result to obtain the fusion classification result, and classifying the fusion classification result based on the output layer to obtain the portrait part and the background part of the to-be-segmented image.

It should be noted that the electronic device provided by the embodiments of the present disclosure and the model training method or the portrait segmentation method in the above embodiments belong to the same concept, and any model training method or portrait segmentation method embodiments provided in the embodiments of the electronic device may be run on the electronic device. Specific implementations are described in detail in the model training method or the portrait segmentation method embodiments, which will not be repeated here.

It should be noted that, for the model training method or the portrait segmentation method according to the embodiments of the present disclosure, those with ordinary skills in the art can understand that all or part of the process of implementing the model training method or the portrait segmentation method according to the embodiments of the present disclosure can be obtained through a computer program controlling the relevant hardware to complete. The computer program may be stored in a computer-readable storage medium, such as stored in the memory of the electronic device. The computer program may be executed by the processor in the electronic device. The execution process may include processes of some embodiments such as the model training method or the portrait segmentation method. The storage medium may be a magnetic disk, an optical disk, a read-only memory, a random access memory, or the like.

Above is a detailed description of a portrait segmentation method, a model training method, a device and an electronic device provided by the embodiments of the present disclosure. In the present disclosure, specific examples are taken to explain the principles and implementation modes of the present disclosure. The descriptions of the embodiments are only for helping understand the method and core ideas of the present disclosure. For those with ordinary skills in the art, according to the ideas of the present disclosure, there may be changes in the specific implementation modes and application scopes. As mentioned above, the content of the specification should not be construed as a limitation to the present disclosure.

**Claims**

1.  A portrait segmentation method, **characterized by** comprising:

    receiving an input portrait-segmentation request, and obtaining a to-be-segmented image by the portrait segmentation request, wherein the to-be-segmented image is an image required to be portrait segmented;
    invoking a portrait segmentation model, the portrait segmentation model being pre-trained and comprising a feature-extraction network, a double branch network and an output layer, the double branch network comprising a portrait branch network and a background branch network, the output layer being connected to the portrait branch network and the background branch network;
    extracting image features of the to-be-segmented image by the feature extraction network;
    classifying the image features by the portrait branch network to obtain a portrait classification result, and classifying the image features by the background branch network to obtain a background classification result; and
    fusing the portrait classification result and the background classification result to obtain a fusion classification result, and classifying the fusion-classification result by the output layer to obtain a portrait part and a background part of the to-be-segmented image.

2.  The portrait segmentation method as claimed in claim 1, wherein the portrait branch network comprises N portrait network segments with a same architecture, the background branch network comprises N background network segments with a same architecture, and N is an integral number;
    the classifying the image features by the portrait branch network to obtain a portrait classification result, and classifying the image features by the background branch network to obtain the background classification result, comprise:

    classifying the image features by a first portrait network segment to obtain a first portrait classification result, and classifying the image features by a first background network segment to obtain a first background classification result;
    fusing the first portrait classification result, the first background classification result and the image features to obtain a first group of fusion features, classifying the first group of fusion features by a second portrait network segment to obtain a second portrait classification result, and classifying the first group of fusion features by a second background network segment to obtain a second background classification result;
    fusing the second portrait classification result, the second background classification result and the image features to obtain a second group of fusion features, and performing similar operations until a N-th portrait classification result is obtained through classifying a (N-1)-th group of fusion features by a N-th portrait network segment, and a N-th background classification result is obtained through classifying the (N-1)-th group of fusion features by a N-th background network segment; and
    configuring the N-th portrait classification result as the portrait classification result of the portrait branch network, and configuring the N-th background classification result as the background classification result of the background branch network.

3.  The portrait segmentation method as claimed in claim 2, wherein each of the portrait network segments comprises an encoding module, a decoding module connected to the encoding module, and a classification module connected to the decoding module;
    the classifying the first group of fusion features by the second portrait network segment to obtain the second portrait classification result, comprises:

    performing a feature-extraction operation and a down-sampling operation for the first group of fusion features by the encoding module of the second portrait network segment to obtain encoded features;
    performing another feature-extraction operation and an up-sampling operation for the encoded features by the decoding module of the second portrait network segment to obtain decoded features with a same scale as the first group of fusion features; and

classifying the decoded features by the classification module of the second portrait network segment to obtain the second portrait classification result.

4. The portrait segmentation method as claimed in claim 3, wherein the encoding module comprises a plurality of first convolution sub-modules with a same architecture, the plurality of first convolution sub-modules are connected in sequence, and each of the first convolution sub-modules comprises:

a first convolution unit with a convolution kernel size of 3×3 and a step size of 2, a first normalization unit and a first activation-function unit connected in sequence.

5. The portrait segmentation method as claimed in claim 3, wherein the decoding module comprises a plurality of second convolution sub-modules with a same architecture, and the plurality of second convolution sub-modules are connected in sequence, and each of second convolution sub-modules comprises:

a second convolution unit with a convolution kernel size of 3×3 and a step size of 1, a second normalization unit, a second activation-function unit, and an up-sampling unit with a sampling multiple of 2 connected in sequence.

6. The portrait segmentation method as claimed in claim 3, wherein the classification module comprises a normalization unit with an output interval of [-1, 1].

7. The portrait segmentation method as claimed in claim 3, wherein the encoding module comprises a plurality of first convolution sub-modules, and the decoding module comprises a plurality of second convolution sub-modules, and a number of the first convolution sub-modules and a number of the second convolution sub-modules are the same.

8. The portrait segmentation method as claimed in claim 1, wherein the feature-extraction network comprises a plurality of third convolution sub-modules with a same architecture, the plurality of third convolution sub-modules are connected in sequence, and each of the third convolution sub-modules comprises:

a third convolution unit, a third normalization unit and a third activation-function unit connected in sequence.

9. A model training method, configured to pre-train a portrait segmentation method as claimed in any one of claims 1-8, **characterized by** comprising:

obtaining a sample image, and obtaining classification labels corresponding to the sample image;

constructing a machine learning network, the machine learning network comprising the feature-extraction network, the double branch network and an output layer, the double branch network comprising the portrait branch network and the background branch network, and the output layer being connected to the portrait branch network and the background branch network;

extracting image features of the sample image by the feature extraction network, input the image features into the portrait branch network and the background branch network, to obtain a portrait classification training result output from the portrait branch network and a background classification training result output from the background branch network;

fusing the portrait classification training result and the background classification training result into the output layer to obtain a final classification result;

obtaining a portrait classification loss of the portrait branch network according to the portrait classification training result and the classification label, obtaining a background classification loss of the background branch network according to the background classification training result and the classification label, and obtaining a fusion loss of the output layer according to the final classification result and the classification label; and

obtaining a total loss correspondingly according to the portrait classification loss, the background classification loss, and the fusion loss, adjusting parameters of the portrait branch network and the background branch network according to the total loss; wherein the above steps are repeated until a preset training stop condition is met for ending the training, and the machine learning network being completely trained, is configured as the portrait segmentation model.

10. The model training method as claimed in claim 9, wherein the image features extracted by the feature extraction network comprises information of pixel position features in shallow-level of the sample image.

11. The model training method as claimed in claim 9, wherein the total loss is a sum of the portrait classification loss, the background classification loss, and the fusion loss.

**12.** The model training method as claimed in claim 9, wherein the preset training stop condition comprises: the total loss being less than a minimum value; or a number of iterating parameters reaching a preset number.

**13.** The model training method as claimed in claim 9, wherein the portrait classification loss is calculated based on a batch size for training the machine learning network and a value of each portrait classification result of each portrait network segment in each pixel position.

**14.** The model training method as claimed in claim 9, wherein the background classification loss is calculated based on a batch size for training the machine learning network and a value of each background classification result of each background network segment in each pixel position.

**15.** An electronic device, comprising a processor and a memory, the memory storing a computer program, wherein the processor is configured to load the computer program for executing a portrait segmentation method as claimed in any one of claims 1-8, and/or a model training method as claimed in any one of claims 9-14.

A sample image is obtained, and a classification label corresponding to the sample image is obtained.  — 101

A machine learning network is constructed, the machine learning network including a feature extraction network, a double branch network, , and an output layer. The double branch network includes a portrait branch network, and a background branch network. The output layer connects the portrait branch network and the background branch network. The portrait branch network and the background branch network have a same structure.  — 102

Image feature of the sample image are extracted via the feature extraction network, and the portrait branch network and the background branch network are input for a classification to obtain a portrait classification result output by the portrait branch network and a background classification result output by the background branch network.  — 103

The portrait classification result and the background classification result are fused, and then input into the output layer to perform the classification again, thereby obtaining a final classification result.  — 104

A portrait classification loss of the portrait branch network is obtained according to the portrait classification result and the classification label; a background classification loss of the background branch network is obtained according to the background classification result and the classification label; and a fusion loss of the output layer is obtained according to the final classification result and the classification label.  — 105

A total loss is obtained according to the portrait classification loss, the background classification loss and the fusion loss correspondingly; parameters of the portrait branch network and the background branch network are adjusted according to the total loss; the training is ended when a preset training stop condition is met; and the machine learning network with the training ended is configured as a portrait segmentation network for a portrait segmentation.  — 106

FIG. 1

FIG. 2

FIG .3

Encoding module → Decoding module → Classification module

FIG. 4

Sample image ⟹ | Third convolution module 1 → Third convolution module 2 → Third convolution module 3 | ⟹ Image feature

Convolution unit
↓
Normalization unit
↓
Activation function unit

FIG. 5

An input portrait segmentation request is received, and a to-be-segmented image required to be portrait-segmented is obtained according to the portrait segmentation request. — 201

A pre-trained portrait segmentation model is invoked, the portrait segmentation model including the feature extraction network, the double branch network, and the output layer. The double branch network includes the portrait branch network and the background branch network with a same structure, and the output layer connects to the portrait branch network and the background branch network. — 202

Image features of the to-be-segmented image are extracted based on the feature extraction network. — 203

The image features are classified based on the portrait branch network to obtain the portrait classification result, and the image features are classified based on the background branch network to obtain the background classification result. — 204

The portrait classification result and the background classification result are fused to obtain the fused classification result, and the fused classification result is classified based on the output layer to obtain the portrait part and the background part of the to-be-segmented image. — 205

FIG. 6

Portrait segmentation interface

Please select an image required to be portrait-segmented:

[                    ] [ Open ]

FIG. 7

Portrait segmentation interface

Please select an image required to be portrait-segmented:

| | Open |

Chose a sub-interface

Image A     Image B     Image C

Image D     Image E     Image F

Confirm

FIG. 8

Model training device

| Sample acquisition module 301 | Network construction module 302 |

| Result fusion module 304 | Image classification module 303 |

| Loss acquisition module 305 | Parameter adjustment module 306 |

FIG. 9

Portrait segmentation device

Image acquisition module 401

Model invoking module 402

Independent classification module 404

Feature extraction module 403

Fusion classification module 405

FIG. 10

Processor 501

Memory 502

Electronic device

FIG. 11

Europäisches
Patentamt
European
Patent Office
Office européen
des brevets

# EUROPEAN SEARCH REPORT

Application Number

EP 20 20 5924

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIU YU ET AL: "Fusion that matters: convolutional fusion networks for visual recognition", MULTIMEDIA TOOLS AND APPLICATIONS, KLUWER ACADEMIC PUBLISHERS, BOSTON, US, vol. 77, no. 22, 27 February 2018 (2018-02-27), pages 29407-29434, XP036609524, ISSN: 1380-7501, DOI: 10.1007/S11042-018-5691-4 [retrieved on 2018-02-27] * the whole document * ----- | 1-15 | INV. G06K9/34 G06K9/62 |
| X | WANXIN TIAN ET AL: "Learning Better Features for Face Detection with Feature Fusion and Segmentation Supervision", ARXIV.ORG, CORNELL UNIVERSITY LIBRARY, 201 OLIN LIBRARY CORNELL UNIVERSITY ITHACA, NY 14853, 20 November 2018 (2018-11-20), XP081199638, * the whole document * ----- | 1-15 | |
| | | | TECHNICAL FIELDS SEARCHED (IPC) |
| | | | G06K |

The present search report has been drawn up for all claims

| Place of search | Date of completion of the search | Examiner |
|---|---|---|
| The Hague | 21 April 2021 | Valencia, Erika |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...........................................................................
& : member of the same patent family, corresponding
document

EPO FORM 1503 03.82 (P04C01)